# EUROPÄISCHE PATENTANMELDUNG

(11) **EP 2 529 691 A1**
(43) Veröffentlichungstag der Anmeldung: **05.12.2012**
(21) Anmeldenummer: 12168619.0
(22) Anmeldetag: 21.05.2012
(51) Int. Cl.: A61C 7/14

(54) **Orthodontisches Bracket und Verfahren zur Herstellung**

(30) Priorität: 31.05.2011 DE 102011076794
(71) Anmelder: DENTAURUM GmbH & Co. KG, 75228 Ispringen (DE)
(72) Erfinder: Müller, Klaus, 75228 Ispringen (DE)
(74) Vertreter: Hoeger, Stellrecht & Partner Patentanwälte

(57) **Zusammenfassung**

Die vorliegende Erfindung betrifft ein orthodontisches Bracket, umfassend eine Bracketbasis mit einer in mesial-distaler Richtung gekrümmten Befestigungsfläche zur Befestigung des Brackets an einem Zahn, und einen von der Bracketbasis abstehenden Bracketkörper, wobei der Bracketkörper einen in mesial-distaler Richtung verlaufenden Schlitz mit einem Schlitzboden zur Aufnahme eines Bogendrahtes aufweist, und wobei der Schlitzboden eine Krümmung in mesial-distaler Richtung aufweist, deren Krümmungsradius größer ist als derjenige der Befestigungsfläche. Die Erfindung betrifft ferner ein Verfahren zur Herstellung eines derartigen orthodontischen Brackets.

## Beschreibung

Die vorliegende Erfindung betrifft ein orthodontisches Bracket, umfassend eine Bracketbasis mit einer in mesial-distaler Richtung gekrümmten Befestigungsfläche zur Befestigung des Brackets an einem Zahn, und einen von der Bracketbasis abstehenden Bracketkörper, wobei der Bracketkörper einen in mesial-distaler Richtung verlaufenden Schlitz mit einem Schlitzboden zur Aufnahme eines Bogendrahtes aufweist.

Die Erfindung betrifft ferner ein Verfahren zur Herstellung eines derartigen orthodontischen Brackets.

Orthodontische Brackets werden zur Korrektur von Fehlstellungen der Zähne eingesetzt. Im Rahmen einer orthodontischen Behandlung werden die Brackets mit ihrer Befestigungsfläche auf die zu korrigierenden Zähne aufgeklebt und anschließend ein Bogendraht in die in mesial-distaler Richtung verlaufenden Schlitze der Bracketkörper eingelegt. Der Bogendraht ist formelastisch und entspricht in seiner spannungsfreien Form dem idealen Verlauf des Zahnbogens nach erfolgter Korrektur der Zahnfehlstellungen. Beim Einlegen in die Schlitze der Bracketkörper wird der Bogendraht elastisch verformt und überträgt durch seine Rückstellkraft die für die Korrektur erforderlichen Zug- und Druckkräfte und Drehmomente auf die Brackets und damit auf die Zähne. Das aktive Element bei der Korrektur der Zahnstellung ist somit allein der Bogendraht, und es ist für eine möglichst effiziente Behandlung daher von wesentlicher Bedeutung, die Kraftübertragung vom Bogendraht auf die Brackets zu optimieren.

Der in die Schlitze eingelegte Bogendraht wird an den Brackets mit Hilfe von elastischen O-Ringen, einem Ligaturendraht oder einem an dem Bracket angeordneten Verriegelungsmechanismus (bei so genannten selbstligierenden Brackets) fixiert, wobei durch diese Fixierung (Ligatur) der Bogendraht insbesondere an den Schlitzboden angedrückt wird, ein Gleiten des Bogendrahtes in Längsrichtung des Schlitzes, d.h. in mesial-distaler Richtung, jedoch weiterhin möglich ist.

Aufgrund des üblichen Herstellungsverfahrens für orthodontische Brackets gibt es für die Ausführung des Schlitzes prinzipiell zwei Varianten. Die Rohlinge für die Brackets werden dabei von einem gefrästen Strangprofil abgelängt, wobei sich das Strangprofil in Längsrichtung des Schlitzes erstreckt. Aus diesen Rohlingen werden die Brackets durch weiteres Fräsen geformt und schließlich derart gebogen, dass die Befestigungsfläche eine mesial-distale Krümmung aufweist, die der Krümmung des Zahns, für den das Bracket vorgesehen ist, entspricht. Der Schlitz zur Aufnahme des Bogendrahts kann bei diesem Herstellungsverfahren entweder bereits in das Strangprofil vor dem Ablängen der Rohlinge eingefräst werden, oder er kann in die einzelnen Brackets eingefräst werden, nachdem diese gebogen wurden. Im ersten Fall weist der resultierende Schlitzboden eine mesial-distale Krümmung auf, die der Krümmung der Befestigungsfläche entspricht, und im zweiten Fall ist der Schlitzboden überhaupt nicht gekrümmt, d.h. eben.

Der Bogendraht weist entlang seines Verlaufs verschiedene Krümmungsradien auf, wobei der Krümmungsradius an jeder Stelle wesentlich größer ist als der Krümmungsradius des betreffenden Zahns, d.h. der Befestigungsfläche der Bracketbasis. Die Krümmung des Bogendrahtes entspricht aber bei keiner der beiden oben beschriebenen Varianten der Krümmung des Schlitzbodens, was im Hinblick auf die Effektivität der Korrekturbehandlung nachteilig ist. Entweder liegt der Bogendraht nur abschnittsweise auf dem Schlitzboden auf, wodurch die Kraftübertragung auf das Bracket verschlechtert wird, oder der Bogendraht wird durch die Anpresskraft der Ligatur im Bereich des Schlitzes zusätzlich verkrümmt, wodurch das Gleiten des Bogendrahts entlang des Schlitzes erschwert wird, was den Behandlungserfolg ebenfalls beeinträchtigen kann.

Der vorliegenden Erfindung liegt die Aufgabe zugrunde, ein orthodontisches Bracket vorzuschlagen, bei dem diese Probleme vermieden werden.

Diese Aufgabe wird bei dem Bracket der eingangs genannten Art erfindungsgemäß dadurch gelöst, dass der Schlitzboden eine Krümmung in mesial-distaler Richtung aufweist, deren Krümmungsradius größer ist als derjenige der Befestigungsfläche.

Dadurch, dass der Schlitzboden bei dem erfindungsgemäßen Bracket eine Krümmung aufweist, die schwächer ist als die Krümmung der Befestigungsfläche, kann die Krümmung des Schlitzbodens unabhängig von der Krümmung der Befestigungsfläche gewählt und in Bezug auf ein optimales Zusammenwirken zwischen dem Bracket und dem Bogendraht angepasst werden. Hierbei ist es insbesondere bevorzugt, wenn der Krümmungsradius des Schlitzbodens dem Krümmungsradius des Bogendrahtes im Bereich desjenigen Zahns entspricht, für den das Bracket vorgesehen ist. Auf diese Weise wird ein formschlüssiges Aufliegen des Bogendrahts auf dem Schlitzboden über die gesamte Länge des Schlitzes ermöglicht, ohne dass dabei zusätzliche Verformungen oder Spannungen (d.h. Verformungen oder Spannungen, die nicht durch zu korrigierende Zahnfehlstellung bedingt sind) in den Bogendraht eingebracht werden müssen. Die Kraftübertragung vom Bogendraht auf das Bracket ist somit optimal, unerwünschte Kipp- oder Rotationsbewegungen des Brackets werden weitgehend verhindert, und die Reibung beim Gleiten des Bogendrahtes entlang des Schlitzes wird minimiert. Durch alle diese Faktoren wird die Effektivität der Korrekturbehandlung verbessert bzw. das Behandlungsziel kann in einer kürzeren Zeit erreicht werden, was für den Patienten einen wesentlichen Vorteil bedeutet.

Günstigerweise liegt der Krümmungsradius des Schlitzbodens im Bereich von ca. 20 bis ca. 180 mm. Dabei weist der Schlitzboden eines Brackets für den mittleren Bereich des Zahnbogens (d.h. für einen Schneide- oder Eckzahn) einen eher kleineren Krümmungsradius auf und der Schlitzboden für ein Bracket für die seitlichen Abschnitte des Zahnbogens (d.h. für einen Backenzahn) einen eher größeren Krümmungsradius, entsprechend dem zunehmenden Krümmungsradius des Bogendrahts von mesial nach distal. Typische Krümmungsradien sind z.B. bei einem Bogendraht für den Unterkiefer von 22 mm (mesial) bis 170 mm (distal) und bei einem Bogendraht für den Oberkiefer von 24 mm (mesial) bis 135 mm (distal).

Der Krümmungsradius der Befestigungsfläche, der dem Krümmungsradius des betreffenden Zahns in mesial-distaler Richtung entspricht, ist demgegenüber deutlich kleiner. Bei dem erfindungsgemäßen Bracket ist der Krümmungsradius der Befestigungsfläche vom Krümmungsradius des Schlitzbodens unabhängig und liegt bevorzugt im Bereich von ca. 3,5 bis ca. 13 mm.

Bei einer bevorzugten Ausführungsform der Erfindung weist der Bracketkörper ein mesiales Flügelpaar und ein distales Flügelpaar auf, die jeweils einen gingivalen Flügel und einen okklusalen Flügel umfassen. Der Schlitz verläuft dabei zwischen den gingivalen Flügeln und den okklusalen Flügeln. Die Flügel verhindern damit eine Verschiebung des Bogendrahtes in gingivale bzw. okklusale Richtung, gleichzeitig dienen sie zur Befestigung der Ligatur (z.B. O-Ringe oder Ligaturendraht).

Es kann vorgesehen sein, dass der Schlitzboden nur im Bereich der beiden Flügelpaare ausgebildet ist, d.h. in einem mesialen und einem distalen Bereich des Bracketkörpers, während er in einem mittleren Bereich des Bracketkörpers durch einen Freiraum unterbrochen ist. Der Krümmungsverlauf des Schlitzbodens ist aber auch in einem solchen Fall durchgehend, d.h. die beiden Abschnitte des Schlitzboden liegen auf einem Kreisbogen.

Bei einer alternativen Ausführungsform des erfindungsgemäßen Brackets verläuft der Schlitz zwischen einem gingivalen Flügel und einem okklusalen Flügel des Bracketkörpers, die jeweils in mesial-distaler Richtung durchgehend sind. In diesem Fall ist auch der Schlitzboden durchgehend und wird nicht durch einen Freiraum unterbrochen.

Das erfindungsgemäße Bracket kann aus einem metallischen Material hergestellt sein, insbesondere aus Stahl, Titan oder einer Dentallegierung.

Daneben ist die Erfindung ebenso auch auf Brackets anwendbar, die aus einem keramischen Material hergestellt sind, insbesondere aus einem auf Aluminiumoxid basierenden Material.

Besonders günstig ist es, wenn das orthodontische Bracket gemäß der vorliegenden Erfindung mittels Pulverspritzgießen hergestellt ist. Dies ermöglicht insbesondere bei großen Stückzahlen eine sehr kostengünstige Herstellung der Brackets, da die Vorgabe der exakten Geometrie eines bestimmten Brackettyps, insbesondere der unterschiedlichen Krümmungen des Schlitzbodens und der Befestigungsfläche, nur einmalig bei der Spritzgussform durchgeführt werden müssen und nicht bei jedem einzelnen Bracket durch eine materialabtragende Bearbeitung wie z.B. Fräsen. Letzteres wäre im Fall der erfindungsgemäßen Brackets sehr aufwändig und daher mit erheblichen Kosten verbunden.

Sowohl metallische als auch keramische Brackets können mittels Pulverspritzgießen hergestellt werden, wobei die entsprechenden Verfahren als MIM-Verfahren (metal injection molding) bzw. als CIM-Verfahren (ceramic injection molding) bezeichnet werden. Im Fall von metallischen Brackets ist alternativ auch eine Herstellung mittels Feinguss möglich.

Ein weiterer Gegenstand der Erfindung ist somit auch ein Verfahren zur Herstellung eines erfindungsgemäßen orthodontischen Brackets, wobei das Verfahren die Herstellung des gesamten Brackets mittels Pulverspritzgießen umfasst.

Besonders bevorzugt umfasst das erfindungsgemäße Verfahren die Herstellung des gesamten Brackets mittels einem MIM-Verfahren (im Fall eines metallischen Brackets) oder einem CIM-Verfahren (im Fall eines keramischen Brackets).

Diese und weitere Vorteile der Erfindung werden anhand des nachfolgenden Ausführungsbeispiels unter Bezugnahme auf die Figuren näher erläutert.

Es zeigen im Einzelnen:
- Figur 1:: eine perspektivische Darstellung eines Ausführungsbeispiels eines erfindungsgemäßen orthodontischen Brackets;
- Figur 2:: eine schematische Querschnittsdarstellung des erfindungsgemäßen Brackets gemäß der Figur 1;
- Figur 3:: eine schematische Querschnittsdarstellung eines Brackets gemäß dem Stand der Technik; und
- Figur 4:: eine schematische Querschnittsdarstellung eines weiteren Brackets gemäß dem Stand der Technik.

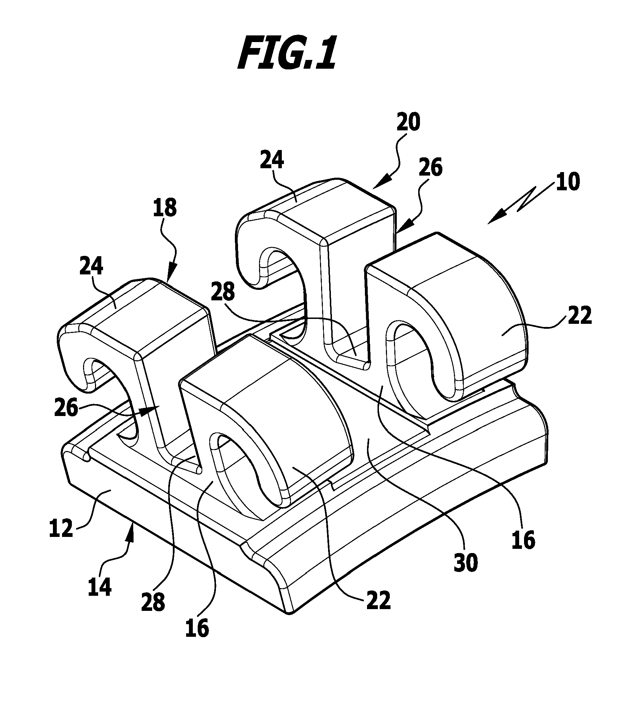

Die Figur 1 zeigt in perspektivischer Darstellung ein Ausführungsbeispiel eines erfindungsgemäßen orthodontischen Brackets, welches als Ganzes mit 10 bezeichnet ist. Das Bracket 10 umfasst eine Bracketbasis 12 mit einer in der Figur 1 aufgrund der gewählten Perspektive nicht sichtbaren Befestigungsfläche 14. Die Befestigungsfläche 14 dient zur Befestigung des Brackets 10 an einem Zahn mittels eines Klebers, wobei die Befestigungsfläche 14 eine dem betreffenden Zahn angepasste Krümmung in mesial-distaler Richtung aufweist.

Das Bracket 10 umfasst ferner einen von der Bracketbasis 12 abstehenden Bracketkörper 16, der ein mesiales Flügelpaar 18 und ein distales Flügelpaar 20 aufweist. Beide Flügelpaare 18, 20 umfassen jeweils einen gingivalen Flügel 22 und einen okklusalen Flügel 24, zwischen denen ein Schlitz 26 in mesial-distaler Richtung verläuft. Der Schlitz 26 dient zur Aufnahme eines in der Figur 1 nicht dargestellten Bogendrahtes.

Der Schlitz 26 weist einen Schlitzboden 28 auf, an den der Bogendraht mittels einer ebenfalls nicht dargestellten Ligatur, die an den Flügelpaaren 18, 20 befestigbar ist, angedrückt wird. Hierbei ist der Schlitzboden 28 nur im Bereich der beiden Flügelpaare 18, 20 ausgebildet, während er in einem mittleren Bereich des Bracketkörpers 16 durch einen Freiraum 30 unterbrochen ist.

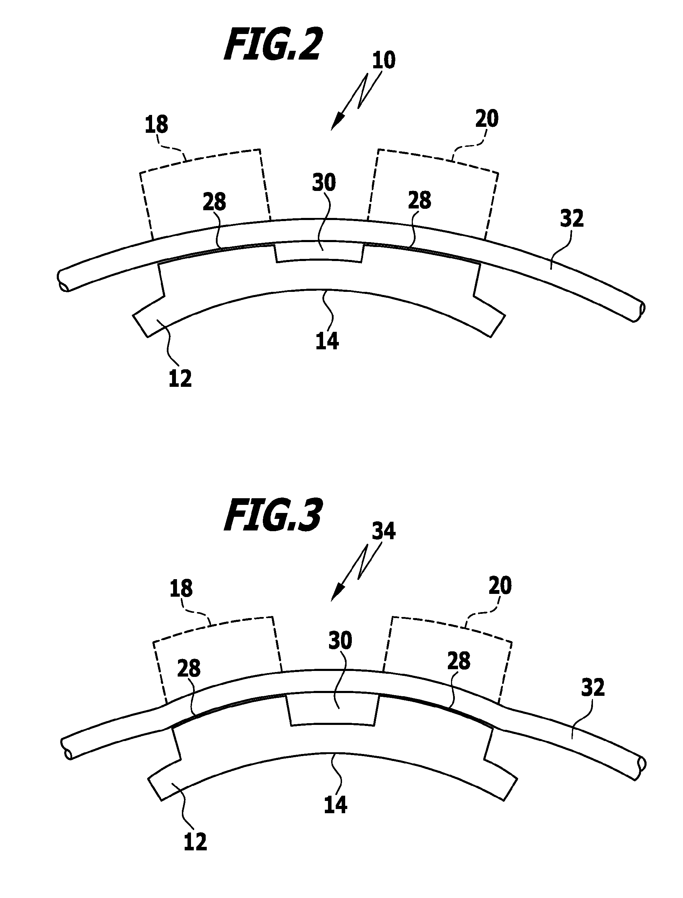

Der Schlitzboden 28 des Brackets 10 weist eine Krümmung in mesial-distaler Richtung auf, deren Krümmungsradius größer ist als derjenige der Befestigungsfläche 14. Zur Verdeutlichung der unterschiedlichen Krümmungen dient die Figur 2, die schematisch einen Querschnitt des Brackets 10 entlang der mesial-distalen Richtung, d.h. der Längsrichtung des Schlitzes 26, zeigt, wobei die hier dargestellten Krümmungsradien im Verhältnis zu den Abmessungen des Brackets 10 nicht maßstabsgetreu sind.

Wie aus der Figur 2 ersichtlich wird, ist die Krümmung des Schlitzbodens 28 an die Krümmung des Bogendrahts 32 im Bereich des Brackets 10 angepasst, sodass der Bogendraht 32 entlang der gesamten mesial-distalen Erstreckung des Schlitzbodens 28 formschlüssig auf diesem aufliegt. Dadurch wird eine optimale Kraftübertragung von dem Bogendraht 32 auf das Bracket 10 bzw. auf den Zahn ermöglicht.

Die Krümmung der Befestigungsfläche 14 ist an die Krümmung des Zahns angepasst, an dem das Bracket 10 befestigt wird. Der Krümmungsradius der Befestigungsfläche 14 ist deutlich kleiner als der Krümmungsradius des Schlitzbodens 28, und ist von diesem völlig unabhängig.

Das orthodontische Bracket 10 kann aus einem metallischen oder aus einem keramischen Material bestehen und ist insbesondere mittels Pulverspritzgießen (MIM oder CIM) hergestellt.

Die Figur 3 zeigt als Vergleich ein Bracket 34 gemäß dem Stand der Technik in einer Querschnittsdarstellung, die derjenigen der Figur 2 entspricht, wobei gleiche oder einander entsprechende Elemente jeweils mit demselben Bezugszeichen versehen sind.

Bei dem Bracket 34 weist der Schlitzboden 28 herstellungsbedingt denselben Krümmungsradius auf wie die Befestigungsfläche 14, d.h. dieser Krümmungsradius ist kleiner als der Krümmungsradius des Bogendrahts 32 im entspannten Zustand. Dadurch wird der Bogendraht 32, der mit Hilfe von nicht dargestellten Ligaturen an den Schlitzboden 28 angedrückt wird, im Bereich des Brackets 10 zusätzlich verformt, d.h. er erfährt gegenüber dem durch die Korrektur angestrebten Verlauf des Zahnbogens in diesem Bereich eine zusätzliche Verkrümmung. Dadurch wird das Gleiten des Bogendrahts 32 entlang des Schlitzes 26 erschwert, was im Rahmen der Korrekturbehandlung unerwünscht ist und deren Effektivität verringert.

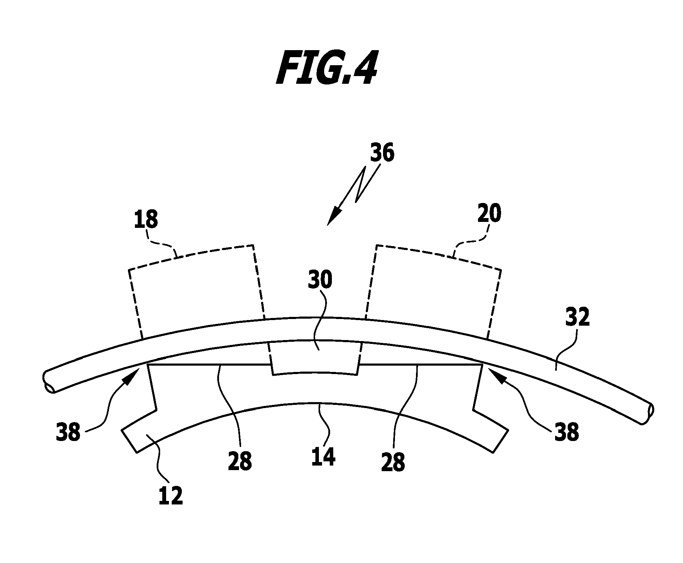

Die Figur 4 zeigt ein weiteres Bracket 36 gemäß dem Stand der Technik in einer den Figuren 2 und 3 entsprechenden Querschnittsdarstellung. Gleiche oder einander entsprechende Elemente sind wiederum mit demselben Bezugszeichen versehen.

Das Bracket 36 weist einen Schlitz 26 mit einem ebenen Schlitzboden 28 auf, da der Schlitz 26 erst nach dem Biegen des Brackets 36 zur Erzeugung der Krümmung der Befestigungsfläche 14 in den Bracketkörper 16 eingefräst wurde. Dies hat zur Folge, dass der Bogendraht 32 im Extremfall nur an den beiden äußeren Kanten 38 des Schlitzbodens 28 auf diesem aufliegt, was zu einer deutlich verschlechterten Kraftübertragung vom Bogendraht 32 auf das Bracket 36 führt.

### Bezugszeichenliste

- 10: Bracket
- 12: Bracketbasis
- 14: Befestigungsfläche
- 16: Bracketkörper
- 18: mesiales Flügelpaar
- 20: distales Flügelpaar
- 22: gingivale Flügel
- 24: okklusale Flügel
- 26: Schlitz
- 28: Schlitzboden
- 30: Freiraum
- 32: Bogendraht
- 34: Bracket
- 36: Bracket
- 38: Kanten

## Patentansprüche

1. Orthodontisches Bracket (10), umfassend eine Bracketbasis (12) mit einer in mesial-distaler Richtung gekrümmten Befestigungsfläche (14) zur Befestigung des Brackets (10) an einem Zahn, und einen von der Bracketbasis (12) abstehenden Bracketkörper (16), wobei der Bracketkörper (16) einen in mesial-distaler Richtung verlaufenden Schlitz (26) mit einem Schlitzboden (28) zur Aufnahme eines Bogendrahtes (32) aufweist,
**dadurch gekennzeichnet, dass** der Schlitzboden (28) eine Krümmung in mesial-distaler Richtung aufweist, deren Krümmungsradius größer ist als derjenige der Befestigungsfläche (14).

2. Orthodontisches Bracket (10) nach Anspruch 1, wobei der Krümmungsradius des Schlitzbodens (28) dem Krümmungsradius des Bogendrahtes (32) im Bereich desjenigen Zahns entspricht, für den das Bracket (10) vorgesehen ist.

3. Orthodontisches Bracket (10) nach Anspruch 1 oder 2, wobei der Krümmungsradius des Schlitzbodens (28) im Bereich von ca. 20 bis ca. 180 mm liegt.

4. Orthodontisches Bracket (10) nach einem der vorangehenden Ansprüche, wobei der Krümmungsradius der Befestigungsfläche (14) im Bereich von ca. 3,5 bis ca. 13 mm liegt.

5. Orthodontisches Bracket (10) nach einem der vorangehenden Ansprüche, wobei der Bracketkörper (16) ein mesiales Flügelpaar (18) und ein distales Flügelpaar (20) aufweist, die jeweils einen gingivalen Flügel (22) und einen okklusalen Flügel (24) umfassen, zwischen denen der Schlitz (26) verläuft.

6. Orthodontisches Bracket (10) nach Anspruch 5, wobei der Schlitzboden (28) nur im Bereich der beiden Flügelpaare (18, 20) ausgebildet ist, während er in einem mittleren Bereich des Bracketkörpers (16) durch einen Freiraum (30) unterbrochen ist.

7. Orthodontisches Bracket nach einem der Ansprüche 1 bis 4, wobei der Schlitz zwischen einem gingivalen Flügel und einen okklusalen Flügel des Bracketkörpers verläuft, die jeweils in mesial-distaler Richtung durchgehend sind.

8. Orthodontisches Bracket (10) nach einem der vorangehenden Ansprüche, wobei das Bracket (10) aus einem metallischen Material hergestellt ist.

9. Orthodontisches Bracket (10) nach einem der vorangehenden Ansprüche, wobei das Bracket (10) aus einem keramischen Material hergestellt ist.

10. Orthodontisches Bracket (10) nach einem der vorangehenden Ansprüche, wobei das Bracket (10) mittels Pulverspritzgießen hergestellt ist, insbesondere mittels einem MIM-Verfahren (metal injection molding) oder einem CIM-Verfahren (ceramic injection molding).

11. Verfahren zur Herstellung eines orthodontischen Brackets gemäß einem der vorangehenden Ansprüche, umfassend die Herstellung des gesamten Brackets mittels Pulverspritzgießen.

12. Verfahren nach Anspruch 11, umfassend die Herstellung des gesamten Brackets mittels einem MIM-Verfahren (metal injection molding).

13. Verfahren nach Anspruch 11, umfassend die Herstellung des gesamten Brackets mittels einem CIM-Verfahren (ceramic injection molding).
